# EUROPÄISCHE PATENTSCHRIFT

(11) **EP 2 702 263 B1**
(45) Veröffentlichungstag und Bekanntmachung des Hinweises auf die Patenterteilung: **02.06.2021**
(21) Anmeldenummer: 12715926.7
(22) Anmeldetag: 13.04.2012
(51) Int. Cl.: F02N 15/00, F02N 15/06, F02N 15/10, F02N 11/00, F02N 15/04

(54) **STARTVORRICHTUNG FÜR EINE BRENNKRAFTMASCHINE**
STARTING DEVICE FOR AN INTERNAL COMBUSTION ENGINE
DISPOSITIF DE DÉMARRAGE POUR UN MOTEUR À COMBUSTION INTERNE

(30) Priorität: 26.04.2011 DE 102011017534
(43) Veröffentlichungstag der Anmeldung: 05.03.2014
(73) Patentinhaber: SEG Automotive Germany GmbH, 70499 Stuttgart (DE)
(72) Erfinder: STOECKL, Rainer, 71701 Schwieberdingen (DE); HALLAS, Patrick, 71640 Ludwigsburg (DE)
(74) Vertreter: Steinbauer, Florian
(86) Internationale Anmeldenummer: PCT/EP2012/056784
(87) Internationale Veröffentlichungsnummer: WO 2012/146495

(56) Entgegenhaltungen:
- EP-A1- 2 436 913
- EP-A2- 2 172 645
- WO-A2-2011/114052
- DE-A1-102006 051 578
- DE-A1-102008 000 883
- DE-A1-102008 054 979
- DE-A1-102008 054 979
- DE-T2- 69 207 927
- JP-A- 2007 071 164
- JP-U- 58 108 270
- JP-U- 60 114 274
- JP-U- 62 047 771

## Beschreibung

Die Erfindung bezieht sich auf eine Startvorrichtung für eine Brennkraftmaschine nach dem Oberbegriff des Anspruches 1.

### Stand der Technik

In der DE 10 2008 000 883 A1 wird eine Startvorrichtung für eine Brennkraftmaschine beschrieben, bei der ein Starterritzel axial zwischen einer zurückgezogenen Außerfunktionsposition und einer vorgerückten Antriebsposition verstellbar ist, in welcher das Starterritzel mit dem Zahnkranz einer Brennkraftmaschine kämmt. Das Starterritzel sitzt auf einer Ritzelwelle auf, die über eine Antriebswelle in Drehbewegung versetzt wird. Mittels eines Einrückrelais wird die Ritzelwelle einschließlich Starterritzel axial vorgespurt. Das Starterritzel ist als ein separat von der Ritzelwelle ausgebildetes Bauteil ausgeführt, das drehfest mit der Ritzelwelle gekoppelt ist, jedoch axial auf der Ritzelwelle verschieblich angeordnet ist. Das Starterritzel ist über eine Tellerfeder an einem Absatz der Ritzelwelle abgestützt, wobei auf der der Feder gegenüberliegenden Stirnseite ein Sicherungsring in einer umlaufenden Nut in der Mantelfläche der Ritzelwelle angeordnet ist, der die axiale Verschiebebewegung des Starterritzels auf der Ritzelwelle begrenzt. Um bei hohen Drehzahlen ein Aufspreizen des Sicherungsrings und damit die Gefahr des Lösens des Sicherungsrings zu vermeiden, ist der Sicherungsring von einer stirnseitigen Ausnehmung im Starterritzel übergriffen, wobei in die Ausnehmung zusätzlich ein Sicherungselement eingebracht ist, welches den Sicherungsring radial übergreift.

Zur Montage muss zunächst die Tellerfeder und anschließend das Starterritzel auf die Ritzelwelle aufgeschoben werden. Danach wird der Sicherungsring in die Nut in der Mantelfläche der Ritzelwelle eingesetzt. Als letzter Schritt wird das Sicherungselement in die Ausnehmung eingeführt, um das Aufspreizen des Sicherungsrings bei hohen Drehzahlen zu verhindern.

Aus der JP60-114274 U und der DE 69207927 T2 sind jeweils Startvorrichtungen bekannt, deren Sicherungsring durch einen Anschlag gegen Aufweiten gesichert ist. Aus der JP58-108270 U ist ein Starterritzel bekannt, bei dem ein Sicherungsring mittels einer Entnahmeausnehmung entnommen werden kann.

### Offenbarung der Erfindung

Der Erfindung liegt die Aufgabe zugrunde, mit einfachen konstruktiven Maßnahmen die Axialbewegung eines Starterritzels in einer Startvorrichtung für eine Brennkraftmaschine zu begrenzen.

Diese Aufgabe wird erfindungsgemäß mit den Merkmalen des Anspruches 1 gelöst. Die Unteransprüche geben zweckmäßige Weiterbildungen an.

Die erfindungsgemäße Startvorrichtung wird zum Starten einer Brennkraftmaschine eingesetzt. Es kann sich um einen frei ausstoßenden Starter oder um einen Maulstarter handeln. Das Starterritzel ist axial zwischen einer Außerfunktionsposition und einer vorgerückten Antriebsposition zu verstellen, in der das Starterritzel in Eingriff mit einem Zahnkranz einer Brennkraftmaschine steht. Das Starterritzel ist gegenüber einem antreibenden Bauteil axial verschieblich angeordnet, um die Vorschubbewegung ausführen zu können. Bei dem antreibenden Bauteil handelt es sich insbesondere um eine Antriebswelle, welche von einem elektrischen Startermotor in Rotation versetzt wird.

Gegenüber dem antreibenden Bauteil ist das Starterritzel über ein Federelement axial abgestützt, so dass der Impuls beim Vorrücken und einem auftreffenden Zahn-auf-Zahn auf den Zahnkranz der Brennkraftmaschine signifikant reduziert wird. Das Federelement übt auf das Starterritzel eine axiale Federkraft aus, wobei im Falle des Zahn-auf-Zahn-Auftreffens das Federelement zusammengedrückt und Energie im Federelement gespeichert wird. Mit dem Einspuren in den Zahnkranz kann das Starterritzel durch die gespeicherte Federkraft axial bis zum Erreichen der endgültigen Startposition vorrücken.

Gemäß einer zweckmäßigen Ausführung ist das Starterritzel als ein Steckritzel ausgebildet, das auf eine Ritzelwelle aufschiebbar ist, mit der in der montierten Position das Starterritzel drehfest gekoppelt ist, jedoch eine axiale Relativbewegung ausführen kann. Die Ritzelwelle wird von der motorisch angetriebenen Antriebswelle zum Starten der Brennkraftmaschine in die Drehbewegung versetzt.

Zur Begrenzung der Axialbewegung des Starterritzels sitzt auf der Welle ein Sicherungsring auf, der einen Anschlag für das Starterritzel bildet. Um zu vermeiden, dass der Sicherungsring bei hohen Umdrehungen sich aufspreizt und von der Welle löst, ist in die Stirnseite des Starterritzels eine Sicherungsausnehmung eingebracht, in die der Sicherungsring einragt. Der Sicherungsring wird radial in seiner Position auf der Welle durch die übergreifende Wandung der Sicherungsausnehmung im Starterritzel fixiert.

Bei der erfindungsgemäßen Startvorrichtung ist das Starterritzel axial in eine Entnahmeposition verschiebbar, in welcher der Sicherungsring axial außerhalb der Sicherungsausnehmung liegt, so dass der Sicherungsring radial aufgeweitet werden kann. Dies ist insbesondere für Montagezwecke von Bedeutung, da der Sicherungsring üblicherweise im aufgeweiteten Zustand auf die aufnehmende Welle aufgeschoben wird bzw. für einen Wechsel von der Welle entnommen werden muss. Um das Aufweiten des Sicherungsrings in einfacher Weise bewerkstelligen zu können, ist die Startvorrichtung konstruktiv so ausgebildet, dass das Starterritzel in eine axiale Entnahmeposition verstellbar ist, in der das radiale Aufweiten des Sicherungsring ohne Behinderung durch die übergreifende Wandung der Sicherungsausnehmung möglich ist. Diese Ausführung erlaubt die Montage bzw. den Wechsel des Sicherungsrings, ohne dass zusätzliche Bauteile am Starterritzel bzw. der Sicherungsausnehmung erforderlich sind, so wie dies im Stand der Technik der Fall ist, wo ein zusätzliches, ringförmiges Sicherungselement nachträglich in die Sicherungsausnehmung an der Stirnseite des Starterritzels zur Begrenzung des radialen Aufweitens des Sicherungsrings erforderlich ist. Bei der erfindungsgemäßen Ausführung kann auf ein derartiges, ringförmiges Sicherungselement verzichtet werden, so dass insgesamt eine konstruktiv einfachere Ausführung gegeben ist. Es muss lediglich sichergestellt werden, dass das Starterritzel axial in die Entnahmeposition verschiebbar ist.

Es kommen grundsätzlich verschiedene Möglichkeiten der Positionierung des Sicherungsrings axial außerhalb der Sicherungsausnehmung in der Entnahmeposition in Betracht. Zum einen kann der Sicherungsring in der Entnahmeposition der Stirnseite des Starterritzels axial vorgelagert sein. Diese konstruktiv einfache Ausführung erfordert lediglich, dass das Starterritzel zum Erreichen der Entnahmeposition axial so weit verschoben wird, dass der Sicherungsring der Stirnseite des Starterritzels axial vorgelagert ist, so dass ein radiales Aufweiten des Sicherungsrings ohne Weiteres möglich ist.

Gemäß einer erfindungsgemäßen Ausführung ist vorgesehen, dass sich innerhalb des Starterritzels an die Sicherungsausnehmung eine Entnahmeausnehmung anschließt, welche einen größeren Durchmesser als die Sicherungsausnehmung aufweist, so dass der Sicherungsring radial aufgeweitet werden kann, auch wenn sich der Sicherungsring innerhalb des Starterritzels befindet. Die Entnahmeausnehmung schließt sich zweckmäßigerweise unmittelbar benachbart zur Stirnseite des Starterritzels an und ist ebenso wie die Sicherungsausnehmung ringförmig ausgebildet. Diese Ausführung hat den Vorteil, dass die Startvorrichtung in Achsrichtung klein bauend ausgeführt sein kann, da der Bauraum für das Erreichen der Entnahmeposition innerhalb der axialen Erstreckung des Starterritzels liegt. Die axiale Erstreckung der Entnahmeausnehmung kann hierbei zumindest annähernd der Dicke des Sicherungsrings entsprechen, wobei die Entnahmeausnehmung eine kleinere axiale Erstreckung als die Dicke des Sicherungsrings aufweisen muss, so dass der Sicherungsring mit dem Erreichen der Entnahmeposition teilweise über die Stirnseite des Starterritzels hinausragt.

Die Sicherungsausnehmung weist zweckmäßigerweise einen Durchmesser auf, der so bemessen ist, dass ein Ringspalt zwischen der Außenseite des Sicherungsrings und der Innenseite der Sicherungsausnehmung besteht. Möglich ist aber auch ein Durchmesser, der so bemessen ist, dass die Außenseite des Sicherungsrings in Kontakt mit der Innenseite der Sicherungsausnehmung steht.

Zum Erreichen der Entnahmeposition ist das Starterritzel zweckmäßigerweise gegen die Kraft des Federelementes zu verschieben. Dadurch ist sichergestellt, dass das Starterritzel ohne äußere Einwirkung durch die Kraft des Federelementes axial in die sichernde Position vorgeschoben ist, in welcher der Sicherungsring innerhalb der Sicherungsausnehmung im Starterritzel liegt. Zur axialen Sicherung kann in die Mantelfläche der Welle eine umlaufende Nut eingebracht sein, in welche der Sicherungsring eingesetzt ist. Die den Sicherungsring umgreifende Sicherungsausnehmung vermeidet, dass der Sicherungsring bei hohen Drehzahlen durch Aufweiten aus der Nut herausspringt und sich von der Welle löst.

Weitere Vorteile und zweckmäßige Ausführungen sind den weiteren Ansprüchen, der Figurenbeschreibung und den Zeichnungen zu entnehmen. Es zeigen:
- Fig. 1: einen Starter für eine Brennkraftmaschine in einem Längsschnitt,
- Fig. 2: einen Schnitt durch das Starterritzel und die Ritzelwelle, auf der das Starterritzel aufsitzt, mit einem Sicherungsring auf der Ritzelwelle, welcher die axiale Vorschubbewegung des Starterritzels begrenzt, wobei das Starterritzel in einer Entnahmeposition steht, in welcher der Sicherungsring der Stirnseite des Starterritzels axial vorgelagert ist,
- Fig. 3: in vergrößerter Darstellung der Bereich zwischen Starterritzel und Ritzelwelle mit dem Sicherungsring,
- Fig. 4: eine Fig. 2 entsprechende Darstellung, jedoch mit dem Starterritzel in der durch die Kraft eines Federelementes vorgeschobenen Position, in welcher sich der Sicherungsring in einer Sicherungsausnehmung befindet, die in die Stirnseite des Starterritzels eingebracht ist,
- Fig. 5: in vergrößerter Darstellung das Starterritzel und die Ritzelwelle mit dem Sicherungsring in der Sicherungsausnehmung,
- Fig. 6 bis Fig. 9: ein weiteres Ausführungsbeispiel mit Darstellungen gemäß den Fig. 2 bis 5, jedoch mit einer zusätzlichen Entnahmeausnehmung im Starterritzel, die sich unmittelbar an die Sicherungsausnehmung zur Aufnahme des Sicherungsrings anschließt.

In den Figuren sind gleiche Bauteile mit gleichen Bezugszeichen versehen.

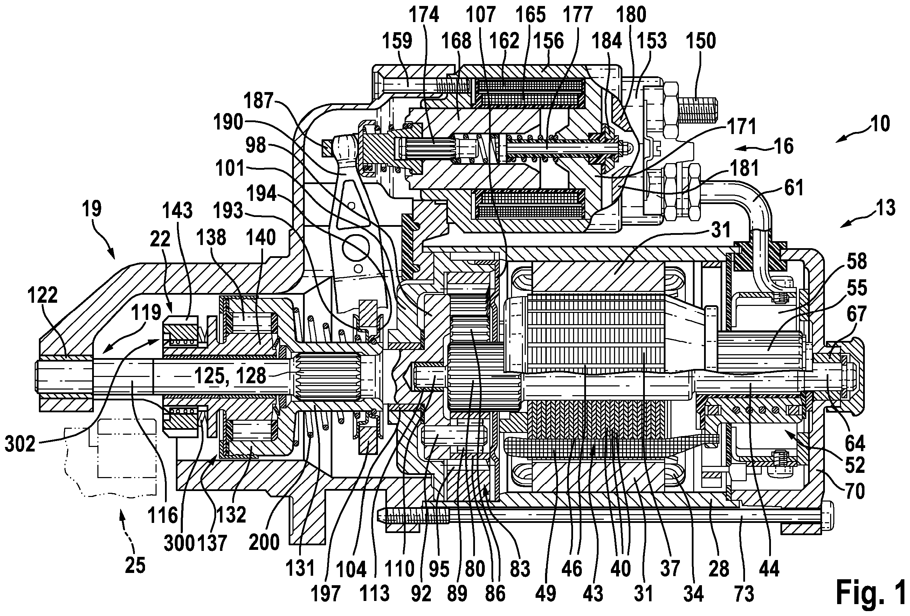

In Fig. 1 ist eine Startvorrichtung 10 im Längsschnitt dargestellt. Die Startvorrichtung 10 weist beispielsweise einen Startermotor 13 und ein Einrückrelais 16 auf. Der Startermotor 13 und das Einrückrelais 16 sind an einem gemeinsamen Antriebslagerschild 19 befestigt. Der Startermotor 13 dient funktionell dazu, ein Andreh- bzw. Starterritzel 22 anzutreiben, wenn es im Zahnkranz 25 der hier nicht dargestellten Brennkraftmaschine eingespurt ist.

Der Startermotor 13 weist als Gehäuse ein Polrohr 28 auf, das an seinem Innenumfang Polschuhe 31 trägt, die jeweils von einer Erregerwicklung 34 umwickelt sind. Die Polschuhe 31 umgeben wiederum einen Anker 37, der ein aus Lamellen 40 aufgebautes Ankerpaket 43 und eine in Nuten 46 angeordnete Ankerwicklung 49 aufweist. Das Ankerpaket 43 ist auf eine Antriebswelle 44 aufgepresst. An dem Andrehritzel 22 abgewandten Ende der Antriebswelle 44 ist des Weiteren ein Kollektor bzw. Kommutator 52 angebracht, der unter anderem aus einzelnen Kommutatorlamellen 55 aufgebaut ist. Die Kommutatorlamellen 55 sind in bekannter Weise mit der Ankerwicklung 49 derartig elektrisch verbunden, dass sich bei Bestromung der Kommutatorlamellen 55 durch Kohlebürsten 58 eine Drehbewegung des Ankers 37 im Polrohr 28 ergibt. Eine zwischen dem Einspurrelais 16 und dem Startermotor 13 angeordnete Stromzuführung 61 versorgt im Einschaltzustand sowohl die Kohlebürsten 58 als auch die Erregerwicklung 34 mit Strom. Die Antriebswelle 44 ist kommutatorseitig mit einem Wellenzapfen 64 in einem Gleitlager 67 abgestützt, welches wiederum in einem Kommutatorlagerdeckel 70 ortsfest gehalten ist. Der Kommutatordeckel 70 wiederum wird mittels Zuganker 73, die über den Umfang des Polrohrs 28 verteilt angeordnet sind (Schrauben, beispielsweise 2, 3 oder 4 Stück) im Antriebslagerschild 19 befestigt. Es stützt sich dabei das Polrohr 28 am Antriebslagerschild 19 ab, und der Kommutatorlagerdeckel 70 am Polrohr 28.

In Antriebsrichtung schließt sich an den Anker 37 ein sogenanntes Sonnenrad 80 an, das Teil eines Planetengetriebes 83 ist. Das Sonnenrad 80 ist von mehreren Planetenrädern 86 umgeben, üblicherweise drei Planetenräder 86, die mittels Wälzlager 89 auf Achszapfen 92 abgestützt sind. Die Planetenräder 86 wälzen in einem Hohlrad 95 ab, das im Polrohr 28 außenseitig gelagert ist. In Richtung zur Abtriebsseite schließt sich an die Planetenräder 86 ein Planetenträger 98 an, in dem die Achszapfen 92 aufgenommen sind. Der Planetenträger 98 wird wiederum in einem Zwischenlager 101 und einem darin angeordneten Gleitlager 104 gelagert. Das Zwischenlager 101 ist derartig topfförmig gestaltet, dass in diesem sowohl der Planetenträger 98, als auch die Planetenräder 86 aufgenommen sind. Desweiteren ist im topfförmigen Zwischenlager 101 das Hohlrad 95 angeordnet, das letztlich durch einen Deckel 107 gegenüber dem Anker 37 geschlossen ist. Auch das Zwischenlager 101 stützt sich mit seinem Außenumfang an der Innenseite des Polrohrs 28 ab. Der Anker 37 weist auf dem vom Kommutator 52 abgewandten Ende der Antriebswelle 44 einen weiteren Wellenzapfen 110 auf, der ebenfalls in einem Gleitlager 113 aufgenommen ist, ab. Das Gleitlager 113 wiederum ist in einer zentralen Bohrung des Planetenträgers 98 aufgenommen. Der Planetenträger 98 ist einstückig mit der Abtriebswelle 116 verbunden. Diese Abtriebswelle 116 ist mit ihrem vom Zwischenlager 101 abgewandten Ende 119 in einem weiteren Lager 122, welches im Antriebslagerschild 19 befestigt ist, abgestützt. Die Abtriebswelle 116 ist in verschiedene Abschnitte aufgeteilt: So folgt dem Abschnitt, der im Gleitlager 104 des Zwischenlagers 101 angeordnet ist, ein Abschnitt mit einer sogenannten Geradverzahnung 125 (Innenverzahnung), die Teil einer sogenannten Wellen-Nabe-Verbindung ist. Diese Welle-Nabe-Verbindung 128 ermöglicht in diesem Fall das axial geradlinige Gleiten eines Mitnehmers 131. Dieser Mitnehmer 131 ist ein hülsenartiger Fortsatz, der einstückig mit einem topfförmigen Außenring 132 des Freilaufs 137 ist. Dieser Freilauf 137 (Richtgesperre) besteht des Weiteren aus dem Innenring 140, der radial innerhalb des Außenrings 132 angeordnet ist. Zwischen dem Innenring 140 und dem Außenring 132 sind Klemmkörper 138 angeordnet. Diese Klemmkörper 138 verhindern in Zusammenwirkung mit dem Innen- und dem Außenring eine Relativdrehung zwischen dem Außenring und dem Innenring in einer zweiten Richtung. Mit anderen Worten: Der Freilauf 137 ermöglicht eine Relativbewegung zwischen Innenring 140 und Außenring 132 nur in eine Richtung. Im Ausführungsbeispiel bildet der Innenring 140 die als separates Bauteil ausgeführte Ritzelwelle, auf der das Andreh- bzw. Starterritzel 22, das die Schrägverzahnung 143 (Außenschrägverzahnung) aufweist, drehfest, jedoch mit axialer Stellmöglichkeit aufsitzt. Das Andrehritzel 22 kann alternativ auch als geradverzahntes Ritzel ausgeführt sein. Statt elektromagnetisch erregter Polschuhe 31 mit Erregerwicklung 34 können auch permanentmagnetisch erregte Pole verwendet werden.

Zwischen dem Andreh- bzw. Starterritzel 22 und einem radial erweiterten Bund der Ritzelwelle 140 befindet sich ein Federelement 300, das beispielsweise als Tellerfeder oder Schraubenfeder ausgebildet ist und das Andreh- bzw. Starterritzel 22 axial abstützt. Die axiale Relativbewegung des Andreh- bzw. Starterritzels 22 auf der Ritzelwelle 140 ist auf der dem Federelement 300 abgewandten Stirnseite von einer Anschlagseinrichtung 302 begrenzt, die in den folgenden Figuren näher beschrieben wird.

Nachfolgend wird auf den Einspurmechanismus eingegangen. Das Einrückrelais 16 weist einen Bolzen 150 auf, der ein elektrischer Kontakt ist und der an den Pluspol einer elektrischen Starterbatterie, die hier nicht dargestellt ist, angeschlossen ist. Dieser Bolzen 150 ist durch einen Relaisdeckel 153 hindurchgeführt. Dieser Relaisdeckel 153 schließt ein Relaisgehäuse 156 ab, das mittels mehrerer Befestigungselemente 159 (Schrauben) am Antriebslagerschild 19 befestigt ist. Im Einrückrelais 16 ist weiterhin eine Einzugswicklung 162 und eine sogenannte Haltewicklung 165 angeordnet. Die Einzugswicklung 162 und die Haltewicklung 165 bewirken beide jeweils im eingeschalteten Zustand ein elektromagnetisches Feld, welches sowohl das Relaisgehäuse 156 (aus elektromagnetisch leitfähigem Material), einen linear beweglichen Anker 168 und einen Ankerrückschluss 171 durchströmt. Der Anker 168 trägt eine Schubstange 174, die beim linearen Einzug des Ankers 168 in Richtung zu einem Schaltbolzen 177 bewegt wird. Mit dieser Bewegung der Schubstange 174 zum Schaltbolzen 177 wird dieser aus seiner Ruhelage in Richtung zu zwei Kontakten 180 und 181 bewegt, so dass eine am zu den Kontakten 180 und 181 Ende des Schaltbolzens 177 angebrachte Kontaktbrücke 184 beide Kontakte 180 und 181 elektrisch miteinander verbindet. Dadurch wird vom Bolzen 150 elektrische Leistung über die Kontaktbrücke 184 hinweg zur Stromzuführung 61 und damit zu den Kohlebürsten 58 geführt. Der Startermotor 13 wird dabei bestromt.

Das Einrückrelais 16 bzw. der Anker 168 hat darüber hinaus die Aufgabe, mit einem Zugelement 187 einen dem Antriebslagerschild 19 drehbeweglich angeordneten Hebel zu bewegen. Dieser Hebel 190, üblicherweise als Gabelhebel ausgeführt, umgreift mit zwei hier nicht dargestellten Zinken an ihrem Außenumfang zwei Scheiben 193 und 194, um einen zwischen diesen eingeklemmten Mitnehmerring 197 zum Freilauf 137 hin gegen den Widerstand der Feder 200 zu bewegen und dadurch das Andrehritzel 22 in den Zahnkranz 25 einzuspuren.

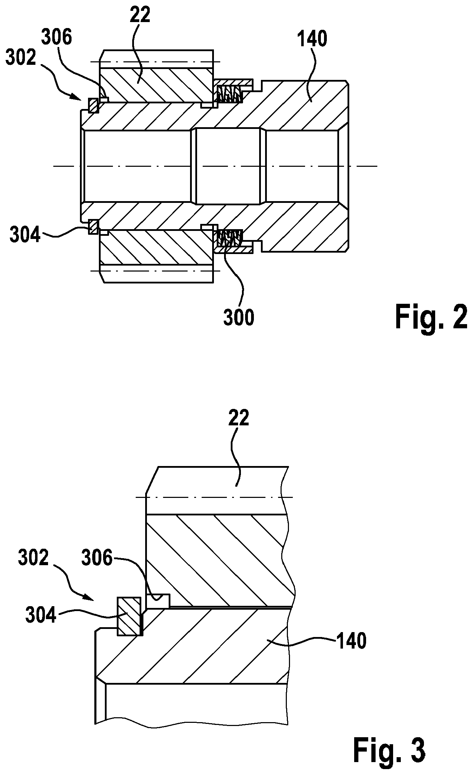

In den Fig. 2 bis 5 ist in einem ersten Ausführungsbeispiel die Anschlagseinrichtung 302 dargestellt, über die die axiale Relativbewegung des Starterritzels 22 gegenüber der Ritzelwelle 140 begrenzt ist. Die Anschlagseinrichtung 302 umfasst auf der dem Federelement 300 gegenüberliegenden Seite einen Sicherungsring 304, der in eine umlaufende Nut in der Mantelfläche der Ritzelwelle 140 eingesetzt ist, sowie eine Sicherungsausnehmung 306, die als ringförmige Ausnehmung in die dem Federelement 300 abgewandten Stirnseite des Starterritzels eingebracht ist. In den Fig. 2 und 3 ist das Starterritzel 22 axial gegen die Kraft des Federelementes 300 in eine Entnahmeposition verstellt, in der der Sicherungsring 304 der Stirnseite des Starterritzels 22 unmittelbar vorgelagert ist, so dass der Sicherungsring 304 in die Nut in der Mantelfläche der Ritzelwelle 140 eingesetzt bzw. aus dieser entnommen werden kann.

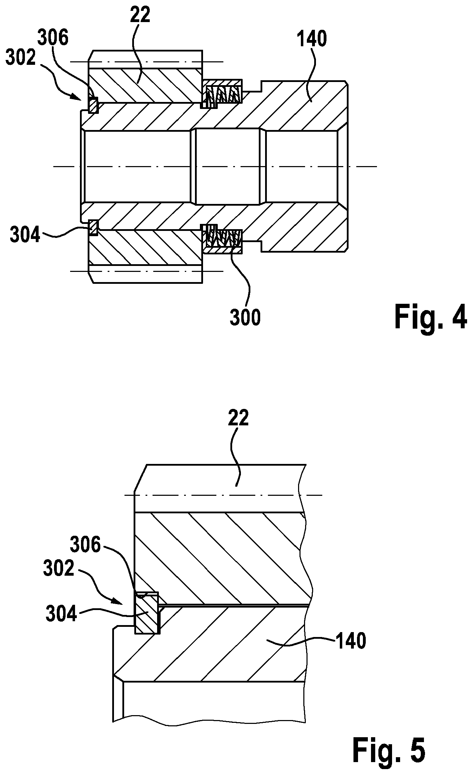

In den Fig. 4 und 5 ist dagegen das Starterritzel 22 durch die Kraft des Federelementes 300 in der axial vorgerückten Position zu sehen, in welcher der Sicherungsring 304 in der Sicherungsausnehmung 306, welche in die Stirnseite des Starterritzels 22 eingebracht ist, aufgenommen ist. Wie der vergrößerten Darstellung gemäß Fig. 5 zu entnehmen, befindet sich in der Anschlags- bzw. Sicherungsposition der Sicherungsring 304 vollständig in der Sicherungsausnehmung 306. Zwischen der radialen Außenfläche des Sicherungsrings 304 und der radial umgreifenden Innenseite der Ausnehmung 306 befindet sich ein kleiner Ringspalt, wobei gegebenenfalls auch Ausführungen in Betracht kommen, in denen kein Ringspalt besteht, so dass die Außenseite des Sicherungsrings 304 unmittelbar auf Kontakt zur Innenwand der Sicherungsausnehmung 306 liegt.

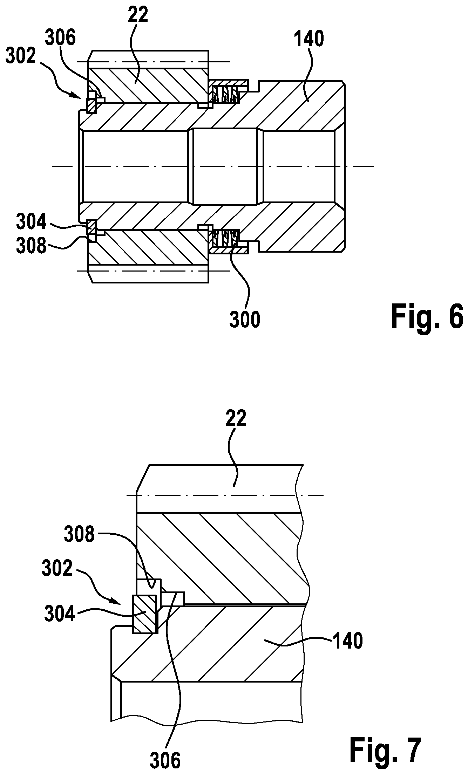

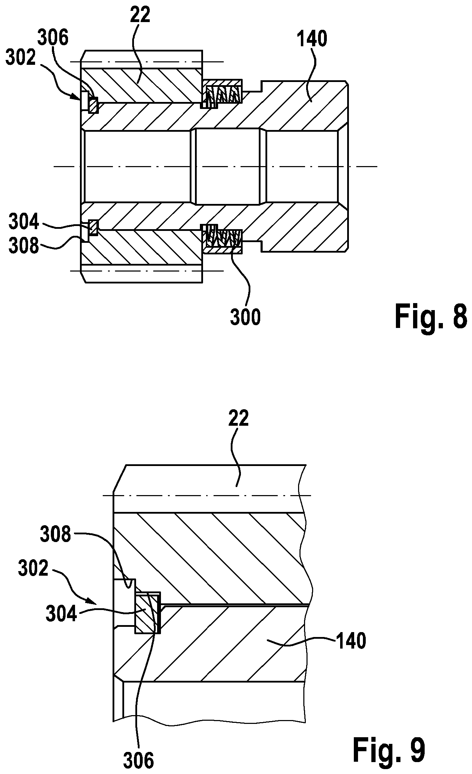

In den Fig. 6 bis 9 ist ein weiteres Ausführungsbeispiel für eine Anschlagseinrichtung 2 zwischen dem Starterritzel 22 und einem Sicherungsring 304 auf der Ritzelwelle 140 dargestellt. Wie im vorangegangenen Ausführungsbeispiel umfasst die Anschlagseinrichtung 302 den Sicherungsring 304, der in einer umlaufenden Nut in der Mantelfläche der Ritzelwelle 140 aufgenommen ist, sowie eine Sicherungsausnehmung 306, die benachbart zur Stirnseite in das Starterritzel 22 eingebracht ist. In der Anschlagsposition gemäß den Fig. 8 und 9 ist der Sicherungsring 304 vollständig in der Sicherungsausnehmung 306 aufgenommen. In der Entnahmeposition gemäß den Fig. 6 und 7 liegt dagegen im Unterschied zum vorangegangenen Ausführungsbeispiel der Sicherungsring 304 nicht vor der Stirnseite des Starterritzels 22, sondern befindet sich vielmehr in einer Entnahmeausnehmung 308, die ebenfalls in das Starterritzel 22 eingebracht ist und sich unmittelbar an die Stirnseite des Starterritzels anschließt. Die Entnahmeausnehmung 308 ist der Sicherungsausnehmung 306 axial direkt vorgelagert und weist einen größeren Durchmesser als die Sicherungsausnehmung 306 auf, so dass, wie insbesondere Fig. 7 zu entnehmen ist, der Sicherungsring 304 radial genügend Abstand zur Innenseite der Entnahmeausnehmung 308 aufweist, so dass ein radiales Aufweiten des Sicherungsringes 304 und Entnehmen aus der Nut in der Mantelfläche des Starterritzels 140 möglich ist. Dies erlaubt es, den Sicherungsring 304 innerhalb des Starterritzels 22 zu entnehmen bzw. in die Nut in der Mantelfläche der Ritzelwelle einzusetzen.

## Patentansprüche

1. Startvorrichtung für eine Brennkraftmaschine,
mit einem Starterritzel (22), das axial zwischen einer Außerfunktionsposition und einer vorgerückten Antriebsposition verstellbar ist und auf einer Welle aufsitzt,
mit einem auf der Welle aufsitzenden Sicherungsring (304) zur Begrenzung der Axialbewegung des Starterritzels (22),
wobei in die Stirnseite des Starterritzels (22) eine Sicherungsausnehmung (306) eingebracht ist, in die der Sicherungsring (304) einragt und die den Sicherungsring (304) radial in seiner Position auf der Welle fixiert,
wobei das Starterritzel (22) axial in eine Entnahmeposition verschiebbar ist, in der der Sicherungsring (304) axial außerhalb der Sicherungsausnehmung (306) liegt und radial aufgeweitet werden kann,
wobei sich innerhalb des Starterritzels an die Sicherungsausnehmung (306) eine Entnahmeausnehmung (308) anschließt, die in das Starterritzel (22) eingebracht ist und einen größeren Durchmesser als die Sicherungsausnehmung (306) aufweist,
wobei die Entnahmeausnehmung (308) unmittelbar benachbart zur Stirnseite im Starterritzel (22) angeordnet ist,
**dadurch gekennzeichnet, dass** die Entnahmeausnehmung eine kleinere axiale Erstreckung aufweist als die Dicke des Sicherungsrings.

2. Startvorrichtung nach Anspruch 1, **dadurch gekennzeichnet, dass** die Entnahmeausnehmung (308) ringförmig ausgebildet ist.

3. Startvorrichtung nach einem der Ansprüche 1 bis 2, **dadurch gekennzeichnet, dass** das Starterritzel (22) gegen die Kraft eines Federelements (300) in die Entnahmeposition verschiebbar ist.

4. Startvorrichtung nach einem der Ansprüche 1 bis 3, **dadurch gekennzeichnet, dass** in die Welle eine Nut zur Aufnahme der Sicherungsrings (304) eingebracht ist.

5. Startvorrichtung nach einem der Ansprüche 1 bis 4, **dadurch gekennzeichnet, dass** das Starterritzel (22) auf einer Ritzelwelle (140) aufsitzt und axial beweglich auf der Ritzelwelle (140) gelagert ist, wobei der Sicherungsring (304) auf der Ritzelwelle (140) angeordnet ist.

## Claims

1. Starter device for an internal combustion engine,
having a starter pinion (22) which is axially movable between an inoperative position and an advanced drive position and is seated on a shaft,
having a securing ring (304) seated on the shaft for limiting the axial movement of the starter pinion (22),
wherein a securing recess (306) is incorporated in the end face of the starter pinion (22), into which said securing ring (304) projects and which fixes the securing ring (304) radially in its position on the shaft,
wherein the starter pinion (22) is axially displaceable into a removal position in which the securing ring (304) lies axially outside of the securing recess (306) and which can be radially expanded,
wherein a removal recess (308), which is incorporated in the starter pinion (22) and has a larger diameter than the securing recess (306), adjoins the securing recess (306) within the starter pinion,
wherein the removal recess (308) is arranged directly adjacent to the end face in the starter pinion (22),
**characterized in that** the removal recess has a smaller axial extension than the thickness of the securing ring.

2. Starter device according to claim 1, **characterized in that** the removal recess (308) is formed in an annular shape.

3. Starter device according to any one of claims 1 to 2, **characterized in that** the starter pinion (22) is displaceable into the removal position against the force of a spring element (300).

4. Starter device according to any one of claims 1 to 3, **characterized in that** a groove for receiving the securing ring (304) is incorporated in the shaft.

5. Starter device according to any one of claims 1 to 4, **characterized in that** the starter pinion (22) is seated on a pinion shaft (140) and is mounted in an axially movable manner on the pinion shaft (140), wherein the securing ring (304) is arranged on the pinion shaft (140).

## Revendications

1. Dispositif de démarrage pour un moteur à combustion interne,
avec un pignon de démarreur (22) qui est mobile axialement entre une position hors fonction et une position d'entraînement avancée et qui est placé sur un arbre,
avec une bague de verrouillage (304) placée sur l'arbre pour limiter le mouvement axial du pignon de démarreur (22),
dans lequel un évidement de verrouillage (306) est formé dans la face d'extrémité du pignon de démarreur (22), dans ledit évidement la bague de verrouillage (304) se projette et qui verrouille la bague de verrouillage (304) radialement dans sa position sur l'arbre,
dans lequel le pignon de démarreur (22) est déplaçable axialement dans une position de retrait dans laquelle la bague de verrouillage (304) se trouve axialement à l'extérieur de l'évidement de verrouillage (306) et peut être élargie radialement,
dans lequel un évidement de retrait (308), qui est introduit dans le pignon de démarreur (22) et a un diamètre plus grand que l'évidement de verrouillage (306), est adjacent à l'évidement de verrouillage (306) à l'intérieur du pignon de démarreur,
dans lequel ledit évidement de retrait (308) étant disposé de manière directement adjacente à la face d'extrémité dans le pignon de démarreur, **caractérisé en ce que** l'évidement de retrait a une extension axiale plus petite que l'épaisseur de la bague de verrouillage.

2. Dispositif de démarrage selon la revendication 1, **caractérisé en ce que** l'évidement de retrait (308) est annulaire.

3. Dispositif de démarrage selon l'une des revendications 1 à 2, **caractérisé en ce que** le pignon de démarreur (22) peut être déplacé dans la position de retrait à l'encontre de la force d'un élément de ressort (300).

4. Dispositif de démarrage selon l'une des revendications 1 à 3, **caractérisé en ce qu'**une rainure de réception de la bague de verrouillage (304) est réalisée dans l'arbre.

5. Dispositif de démarrage selon l'une des revendications 1 à 4, **caractérisé en ce que** le pignon de démarreur (22) est placé sur un arbre de pignon (140) et est monté mobile axialement sur l'arbre de pignon (140), dans lequel la bague (304) est disposée sur l'arbre de pignon (140).
